# EUROPEAN PATENT APPLICATION

(11) **EP 4 712 109 A1**
(43) Date of publication of application: **18.03.2026**
(21) Application number: 24200338.2
(22) Date of filing: 13.09.2024
(51) Int. Cl.: H01B 17/28, H01B 17/36, H02G 15/072

(54) **FINE GRADED CONDENSER CORES FOR BUSHINGS**

(71) Applicant: Hitachi Energy Ltd, 8050 Zürich (CH)
(72) Inventor: GARGANO, Teresa, 6942 Savosa (CH); CZYZEWSKI, Jan, 30-376 Krakow (PL); ROCKS, Jens, 8807 Freienbach (CH); SJOBERG, Peter, 771 43 Ludvika (SE); SJÖDIN, Ana Paula, 771 92 Ludvika (SE); KANJE-NORDBERG, Jens, 587 34 Linköping (SE); MISHAWAR, Prakash, 5400 Baden (CH); CARDANO, Paolo, 21030 Brinzio (IT)
(74) Representative: Vossius & Partner Patentanwälte Rechtsanwälte mbB

(57) **Abstract**

The disclosure provides a fine graded condenser core for a fine graded condenser bushing, the fine graded condenser core comprising: at least one sheet-like spacer wound in a spiral form to form a plurality of layers, wherein the at least one spacer is of a permeable fibrous structure; a conductive sheet; and gas impregnating the at least one sheet-like spacer and the conductive layer.

## Description

The present disclosure relates to fine graded condenser cores and methods for providing them.

Fine graded condenser cores are specific condenser cores for bushings. Bushings are devices that are usually used to carry current at high potential through a grounded barrier, e.g., a transformer tank. In order to decrease and control the electric field near the bushing, condenser bushings have been developed. Condenser bushings facilitate electrical field stress control through insertion of floating equalizer (electrode) layers, also called conductive sheets, which are incorporated in the core of the bushing. Condenser cores with these conductive sheets are called fine graded condenser cores. The condenser core decreases the field gradients inside the bushing and distributes the field along the insulator (insulating parts) outside the bushing, which provides for low partial discharge readings well above nominal voltage readings and high external flash-over voltages. Previously known are bushing technologies as resin impregnated paper (RIP) condenser bushing or SF6 filled non-condenser bushings.

The known technology shows disadvantages as high weight, risk of electric flashes between layers of the conductive sheets, big size, no recyclability and not being environmentally friendly, complicated manufacturing, and more.

The above-mentioned disadvantages are at least partly overcome and/or advantages mentioned herein are at least partly achieved with the features of the independent claims. Dependent claims define preferred embodiments of the present disclosure.

The present disclosure shows several fine graded condenser cores and methods for providing them. The different fine graded condenser cores have some overlapping compulsory features and some overlapping optional features. Examples, alternatives, advantages and other explanations for these overlapping features are generally only explained once but also apply to the other embodiments.

The present disclosure relates to a fine graded condenser core for a fine graded condenser bushing, the fine graded condenser core comprising: at least one sheet-like permeable spacer wound in a spiral form to form a plurality of layers; a conductive sheet; and gas impregnating the at least one spacer.

The fine graded condenser core may be fixed with a conductor or separately from the conductor. When separated from the conductor, the fine graded condenser core preferably comprises a conductor tube, which is further explained below.

The spacer wound in a spiral form may be wound around the conductor and/or conductor tube. The fine graded condenser core may be circular symmetrical around the conductor and/or conductor tube.

The at least one sheet-like permeable spacer may be one sheet-like permeable spacer or a plurality of sheet-like permeable spacers. Permeable spacer means that the gas can pass through the spacer. The gas can be in holes and/or gaps in the spacer. This may also be meant with "impregnating". The gas may also impregnate the conductive sheet and/or surround it. The spacer may be electrically insulating. The permeable spacer(s) makes the fine graded condenser core lighter because the permeable spacer is lighter than film. The permeable spacer further reduces and prevents electric flashes between conductive sheets.

There may be a plurality of conductive sheets. The conductive sheets may be separated and/or electrically insulated from each other by the at least one spacer. Pairs of neighboring conductive sheets may each constitute a partial capacitor of the condenser. This may make a series connection, thus dividing the voltage into portions. There may be many neighboring conductive sheets (many pairs of conductive sheets - with each pair of neighboring sheets making one partial capacitor of the condenser). This may divide the voltage into small portions, making the grading "fine". This may provide a fine graded capacitive core. The plurality of conductive sheets may be positioned and/or shaped as in conventional RIP bushings. The radial distance may be different.

Preferably the gas is under pressure, meaning a pressure above atmospheric pressure.

This design of the fine graded condenser core is more compact. The material between the conductive sheets is more compact. This material is permeable spacer and gas. While being more compact, electric discharge between edges of electrodes is still well prevented in the open gas space.

Various embodiments may preferably implement the following features.

Preferably, the core further comprises at least one sheet-like non-permeable spacer wound in a spiral form to form a plurality of layers.

The non-permeable spacer can be a polymeric foil. Polymers can be e.g. polyester, polypropylene, polyimide. The advantage of such foil spacer is that it provides a full barrier for an electric discharge between the neighboring conductive sheets. The combination of permeable and non-permeable layers (here: permeable spacer and non-permeable spacer) is preferred.

Preferably, each of the at least one sheet-like non-permeable spacer is an organic spacer or an inorganic fibrous structure spacer.

Preferably, the conductive sheet is non-permeable.

The non-permeable conductive sheet can be made of aluminum foil. Alternatively, the non-permeable conductive sheets can be formed as an electrically conductive coating deposited on the non-permeable (foil) spacer material. The combination of permeable and non-permeable layers (here: permeable spacer and non-permeable conductive sheet) is preferred.

There may be non-permeable spacer and non-permeable conductive sheets in the same fine graded condenser core.

Preferably, each of the at least one sheet-like permeable spacer is an organic spacer or an inorganic fibrous structure spacer. Examples, alternatives, advantages and other explanations for these aspects are explained later in this disclosure.

Preferably, the fine graded condenser core further comprises a casing, preferably wherein the casing is made of porcelain, fiberglass, silicone or epoxy.

The casing may be made of fiberglass together with silicone. A casing made of silicone may be a composite structure. Silicone may be one part of the composite structure. The casing may be a composite insulator casing consisting of glass-fiber epoxy material core at the inner side and silicone outer insulator with weather sheds on the outer side. The inner side may be a conductor tube and/or (be configured to) border the conductor.

The outermost conductive sheet may be a rigid tube-like electrode keeping the wound spacer in position. The innermost conductive sheet may be electrically connected to the conductor or conductor tube. Alternatively, the innermost conductive sheet may be electrically isolated from the conductor and/or conductor tube. This isolation may be achieved by the gas in a space between the innermost conductive sheet and the conductor and/or conductor tube. When gas is impregnating the space between conductor / conductor tube (for example at HV) and innermost foil (conductive sheet), and the HV tube (conductor / conductive tube) is smooth enough, there is no need to electrically connect the foil to the conductor. This is also an advantage in terms of electric field and or rating of the bushing. More space for the conductor section can be provided. The innermost conductive sheet may be made as a rigid tube of a diameter larger than the conductor, thus separating the conductor from the at least one wound spacer. In such a way a slit is formed between the conductor and the spacer block allowing for the gas to circulate and dissipate heat from the conductor.

Preferably, the fine graded condenser core further comprises a flange configured to connect the casing to ground.

The Flange may also be configured to provide a mounting fixture to the fine graded condenser core. The flange may be electrically connected to the outermost conductive sheet, to provide ground potential to it. The wound core may be mechanically clamped or sustained at the level of the flange. Partial conductive layer foils may be used to compensate possible deformation of the foils at the level of the clamp.

Preferably, the gas comprises at least one of Sulfur hexafluoride (SF6), F-component gas or natural gas.

F-component gas is also called F-gas. Examples for F-gases are HFCs (hydrofluorocarbons), PFCs (perfluorocarbons) and NF3 (nitrogen trifluoride). Further examples of F-gases include fluoronitriles, fluoroketones, or hydrofluoroolefins. Example of a fluoronitrile gas is 2,3,3,3-Tetrafluoro-2-(trifluoromethyl)propanenitrile (C₄F₇N) gas, e.g., Novec^{™} 4710 Insulating Gas from 3M^{™} company. Example of a fluoroketone gas is 1,1,1,3,4,4,4-heptafluoro-3-(trifluoromethyl)-2-Butanone (C₅F₁₀O) gas, e.g., Novec^{™} 5110 Insulating Gas from 3M^{™} company. Example of a hydrofluoroolefin gas is trans-1,3,3,3-Tetrafluoropropene HFO-1234z(E) of chemical formula C₃H₂F₄. Under F-component gases also mixtures of the above fluorinated gases with carbon dioxide, nitrogen, and/or oxygen may be understood, where the molar content of the fluorinated gas is not less than 3%. An alternative is green gas. The pressure of the gas in the core can be lower than in conventional cores. Lower pressure means no need to reinforce the mechanical design and even more important reduction of safety risks in the factory and on the field. Lower pressure is reducing risks of damage of equipment and injuries at personnel. The solution can meet both sustainability goal with green gas and safety with acceptable pressure.

Preferably, natural gas comprises at least one of nitrogen, carbon dioxide or technical air.

Preferably, the gas is not pure oxygen. Pure oxygen is dangerous in applications. Technical air is a dry (virtually no H2O) gas mixture and controlled amount of oxygen and nitrogen.

Preferably, the at least one sheet-like permeable spacer is electrically insulating and wherein the gas is natural gas. Examples, alternatives, advantages and other explanations for these aspects are explained later in this disclosure.

Preferably, the at least one sheet-like permeable spacer is of a synthetic and permeable fibrous structure. Examples, alternatives, advantages and other explanations for these aspects are explained later in this disclosure.

Preferably, a fine graded condenser bushing comprises a conductor and the fine graded condenser core as disclosed before.

The conductor can be an integral part of the fine graded condenser bushing. Alternatively, a conductor tube may be part of the fine graded condenser bushing. In this case, the fine graded condenser bushing can have an axial opening through which the conductor runs. In this second case, the condenser core will have a conductor tube used for the conductor to run through. There may be space between the conductor and the core. This improves cooling without electrical stress. The conductor or conductor tube may be configured for (/to carry) high voltage (HV) potential. The conductor or conductor tube may extend through the length of the condenser core.

The fine graded condenser core as described contains the gas, preferably under pressure. In this manner, preferably, the fine graded condenser bushing/core is a container of an elongated cylindrical shape. Other shapes are possible. The outer walls of the container may be electrically insulating in at least two sections: at an upper flange and a lower flange. The inner wall of the container may be electrically conductive. The power current conductor (a tube or a full rod) may form that inner wall of the container. Alternatively, the conductor tube may constitute the inner wall. The inner wall and the outer wall may confine the gas.

Preferably, an innermost conductive sheet is made as a rigid tube of a diameter larger than the conductor.

In this manner, the conductor is separated from the at least one wound spacer. In such a way a slit is formed between the conductor and the spacer block allowing for the gas to circulate and dissipate heat from the conductor.

Preferably, a system comprises an apparatus and the fine graded condenser bushing as described, wherein the conductor is electrically connected to the apparatus, and wherein the apparatus is one of a transformer, a switchgear or a high voltage apparatus.

The described fine graded condenser bushing may be applied as/for transformer bushing (including gas insulation transformer as used in Japan and/or Middle East), wall bushing, pluggable bushing, cable termination, instrument transformer, gas-insulated busbar, bushing for dead tank breaker, gas insulated bushing (GIS), gas insulated line (GIL), cable, alternating current (AC), direct current (DC), and others.

The fine graded condenser bushing may be an AC and/or DC bushing insulated with gas, fine graded capacitive core and combination of permeable and non-permeable layers with multiple materials. In DC applications, dimensions of bushings in RIP technology are generally much bigger than in AC. In DC applications, the disclosure of this document brings even more pronounced advantages: the big size of (RIP) condenser cores in DC is challenging in production with requirements of high quality of the casting process in huge amount of epoxy material and with high investments on casting equipments. Further, the weight of RIP cores is challenging mechanical performance in application such as wall bushings. RIP technology is reaching limits in size for this technical application, the disclosure of this document can allow reaching next level of HVDC requests. The disclosure of this document overcomes the disadvantages of the RIP explained above.

The present disclosure also relates to a method for providing a fine graded condenser core in a gas atmosphere, the method comprising: winding at least one sheet-like permeable spacer and a conductive sheet into a spiral form to form a plurality of layers; and enclosing the at least one sheet-like permeable spacer and the conductive sheet in a casing; pumping out of an old gas atmosphere; creating the gas atmosphere in the casing, wherein the gas of the gas atmosphere impregnates the at least one sheet-like permeable spacer and fills the spaces between the at least one sheet-like spacer, the conducting sheet and the casing.

Further examples, alternatives, advantages and other explanations for these aspects are explained later in this disclosure. The method may further comprise drying the spacer and conductive sheet at an elevated temperature under vacuum (or low pressure), preferably between pumping out the old gas atmosphere and creating the (new) gas atmosphere. The enclosing may contain the gas atmosphere, so that it cannot escape the casing. The fine graded condenser core provided in this method may be the fine graded condenser core as described. The method may not comprise a casting process. This is also an advantage.

When a synthetic spacer is used, the drying step may be omitted. The synthetic material does not absorb moisture, therefore drying is not needed.

The described advantages of the aspects are neither limiting nor exclusive to the respective aspects. An aspect might have more advantages, not explicitly mentioned.

The present disclosure also relates to a fine graded condenser core for a fine graded condenser bushing, the fine graded condenser core comprising: at least one sheet-like electrically insulating spacer wound in a spiral form to form a plurality of layers; a conductive sheet; and natural gas impregnating the at least one sheet-like insulating spacer and the conductive layer.

Examples, alternatives, advantages and other explanations for some of these aspects are explained at other parts of this disclosure.

In this aspect, the spacer is electrically insulating and the gas is natural gas. The gas is not SF6 and preferably does not comprise SF6. SF6 would be sensitive to particles and non-uniform electrical fields. SF6 could contaminate the setup. Also, the setup has better dielectric behavior under non-uniform electric fields with natural gas than with SF6. This is also due to the contaminations. This also makes processes in the factory and at site easier and more reliable. Further, the combination of natural gas and the fine graded capacitive core allows for a more compact design and lower pressure, which is again safer. Further, natural gas is not prompt to condensation at low temperatures. The manufacturing is also more simple, safer, and the process is shorter. Also, natural gas is more environmentally friendly than SF6.

Preferably, natural gas comprises at least one of nitrogen, carbon dioxide or technical air. Examples, alternatives, advantages and other explanations for these aspects are also explained in other parts of this disclosure.

The advantage of the natural gas is better performance at highly non-uniform electric field stress - which is present at sharp edges of conductive materials (conducting sheets) and when large curvature of the surface of a dielectric material is present (thin fibers, thin foil). The natural gases are also less sensitive to contamination by solid particles with respect to electric discharges. Particles may be present due to e.g. production processes of insulating spacer including cutting. Conventionally used gases, like SF6, require very clean environment and no sharp edges on solid materials.

Preferably, the at least one sheet-like insulating spacer comprises at least one of paper, film or plastic.

The combination of natural gas, the fine graded capacitive core and the insulating spacers being at least one of paper, film or plastic further increases the above-mentioned technical effects. Performance at non-uniform electric fields is further improved, design may be even more compact and so on. Paper, film and plastic also have the advantage of higher convenience for winding as they do not stretch and form stable cylindrical structure after winding; and low cost.

Preferably, the at least one sheet-like insulating spacer is non-woven.

The combination of natural gas, the fine graded capacitive core and the insulating spacers being non-woven further increases the above-mentioned technical effects. Performance at non-uniform electric fields is further improved, the design may be even more compact and so on.

Examples, alternatives, advantages and other explanations for these aspects are also explained in below parts of this disclosure.

Preferably, the fine graded condenser core further comprising a casing, preferably wherein the casing is made of porcelain, fiberglas, silicone or epoxy. Examples, alternatives, advantages and other explanations for these aspects are also explained at other parts of this disclosure.

Preferably, the fine graded condenser core further comprising a flange configured to electrically connect the casing to ground. Examples, alternatives, advantages and other explanations for these aspects are also explained in other parts of this disclosure.

Preferably, the at least one sheet-like insulating spacer is a permeable spacer, and preferably the fine graded condenser core further comprises at least one sheet-like non-permeable spacer and/or the conductive sheet being non-permeable. Examples, alternatives, advantages and other explanations for these aspects are also explained in other parts of this disclosure.

Preferably, each of the at least one sheet-like insulating spacer is of a synthetic and permeable fibrous structure. Examples, alternatives, advantages and other explanations for these aspects are also explained in other parts of this disclosure.

Preferably, a fine graded condenser bushing comprises a conductor and the fine graded condenser core as described. Examples, alternatives, advantages and other explanations for these aspects are also explained in other parts of this disclosure.

Preferably, an innermost conductive sheet is made as a rigid tube of a diameter larger than the conductor.

In this manner, the conductor is separated from the at least one wound spacer. In such a way a slit is formed between the conductor and the spacer block allowing for the gas to circulate and dissipate heat from the conductor.

Preferably, a system comprises an apparatus and the fine graded condenser bushing as described, wherein the conductor is electrically connected to the apparatus, and wherein the apparatus is one of a transformer, a switchgear or a high voltage apparatus. Further examples, alternatives, advantages and other explanations for these aspects are also explained in other parts of this disclosure.

The fine graded condenser bushing may be an AC and/or DC bushing insulated with natural gas.

The fine graded condenser core may comprise alternating permeable and non-permeable layers.

The present disclosure also relates to a method for providing a fine graded condenser core in a natural gas atmosphere, the method comprising: winding at least one sheet-like insulating spacer and a conductive sheet into a spiral form to form a plurality of layers; and enclosing the at least one sheet-like insulating spacer and the conductive sheet in a casing; pumping out of an old gas atmosphere; creating the natural gas atmosphere in the casing, wherein the natural gas of the natural gas atmosphere impregnates the at least one sheet-like insulating spacer and fills the spaces between the at least one sheet-like insulating spacer, the conducting sheet and the casing.

Examples, alternatives, advantages and other explanations for these aspects are also explained in other parts of this disclosure. The method may further comprise drying the spacer and conductive sheet at an elevated temperature under vacuum, preferably between pumping out the old gas atmosphere and creating the (new) gas atmosphere. The enclosing may contain the gas atmosphere, so that it can not escape the casing. The fine graded condenser core provided in this method may be the fine graded condenser core as described. The method may not comprise (explicitly exclude) a casting process. This is also an advantage.

When a synthetic spacer is used, the drying step may be omitted. The synthetic material does not absorb moisture, therefore drying is not needed.

The described advantages of the aspects are neither limiting nor exclusive to the respective aspects. An aspect might have more advantages, not explicitly mentioned.

The present disclosure also relates to a fine graded condenser core for a fine graded condenser bushing, the fine graded condenser core comprising: at least one sheet-like spacer wound in a spiral form to form a plurality of layers, wherein the at least one spacer is of a permeable fibrous structure; a conductive sheet; and gas impregnating the at least one sheet-like spacer and the conductive layer.

The at least one sheet-like spacer is a permeable fibrous structure. Fibrous structure may also be called fabric. Examples for the permeable fibrous structure may be non-woven, a woven fibrous structure, a knitted fibrous structure or mesh, and a net structure or a mesh. In a net and/or mesh the fibers can be e.g. welded with each other. A mesh fabric may be chaotic and/or pressed fibers. A mesh fabric has many holes. This allows the gas to be in the holes (impregnate). The gas also (partially) insulates. A knitted fabric may have meandering fibers. These aspects are especially advantageous for high voltage direct current (HVDC) applications. The capacity of the just disclosed fine graded condenser core can be easily expanded.

Examples, alternatives, advantages and other explanations for some of these aspects (like permeability and the setup of the fine graded condenser core) are also explained in other parts of this disclosure.

Preferably, the permeable fibrous structure of the at least one spacer is synthetic. Preferably, the synthetic fibrous structure is produced by chemical or biochemical synthesis, and/or made from chemicals or artificial substances.

The synthetic material may be made in this way rather than from natural substances. In an alternative, the permeable fibrous structure of the at least one sheet-like spacer may be a natural material. Synthetic material with electrodes (conductive sheets) as aluminum foils non-woven impregnated with gas as HVDC wall bushing/core has advantages of smaller size, fast production, cheap production and lean production. Conventional RIP body production needs for production a huge mass and a big core needs to be casted. These disadvantages are overcome with the core of this disclosure. Synthetic material has the further advantage of not absorbing humidity. This omits degrading gas performance and drastically reduces time for drying which is quite significant for big cores. The winding and assembling phases have the following advantages over the assembly of conventional systems: (1) the core can be more compact, meaning a less time consuming winding phase; (2) no need of casting large volumes because there is no casting phase; (3) assembly is easier because object more simple and less heavy. The big size of conventional (RIP) condenser cores is challenging in production with requirements of high quality of the casting process in huge amount of epoxy material and with high investments on casting equipments. Further, the weight of RIP cores is challenging mechanical performance in application such as wall bushings. RIP technology is reaching limits in size for this technical application, the disclosure of this document can allow reaching next level of HVDC requests. The disclosure of this document overcomes the disadvantages of the RIP explained above.

Preferably, the synthetic fibrous structure is made from hybrid organic and inorganic fibrous structure, organic fibrous structure, or inorganic fibrous structure.

The fibrous structure may be made of fibers comprising organic polymers.

Advantages of inorganic material are higher possible operating temperatures. Also, inorganic material is less temperature dependent on electric resistivity. Therefore, there is less deviation from optimal electric field stress distribution in DC applications when a temperature gradient is present within the condenser core. This may happen when the conductor is hot and peripheral areas are cold. Also, generally higher temperatures are possible - also high temperature transformer. Inorganic fabric is more compact.

Advantages of organic material are that they are lightweight, elastic and conformable.

Preferably, the permeable fibrous structure is non-woven, and/or wherein the permeable fibrous structure is a woven mesh, net structure or knitted fibrous structure.

The permeable fibrous structure being a woven mesh may be an alternative to non-woven. The fibrous structure may be only woven mesh.

An advantage of non-woven material is a higher compressibility. Especially close to the edge of a conductive sheet being between two layers of a non-woven spacer, they (layers of non-woven spacer) will deform in such a way, that they will touch each other, thus leaving no free gas space at the edge of the conductive sheet. If the non-woven spacer would not behave like this, such a free space (slit) is a potential channel for an electric discharge developing from the edge of the conductive sheet into the gas. Further, a large number of thin fibers, in the non-woven material, form a barrier against electric discharge.

An advantage of knitted material is that it is typically made of thicker fibers, which have a larger radius of curvature of fiber surface. Thus, there is a smaller electric field stress at the surface and hence less probable electric discharge initiation at the surface. Knitted material is also more compressible. Typical fiber diameters of fibers in knitted material may be larger than 30 µm, preferably larger than 100 µm. Fibers in a typical non-woven material are of less than 20 µm.

An advantage of mesh or net structure is a light weight. Further, the core may be wound more compact and tight, due to better flexibility, so that it can be mechanically stable.

Preferably, the fine graded condenser core further comprising a casing, preferably wherein the casing is made of porcelain, fiberglass, silicone or epoxy. Examples, alternatives, advantages and other explanations for these aspects are also explained in other parts of this disclosure.

Preferably, the core further comprises a flange configured to electrically connect the casing to ground. Examples, alternatives, advantages and other explanations for these aspects are also explained in other parts of this disclosure. The wound core may be mechanically clamped or sustained at the level of the flange.

Preferably, the gas comprises at least one of Sulfur hexafluoride, SF6, F-component gas or natural gas. Examples, alternatives, advantages and other explanations for these aspects are also explained in other parts of this disclosure.

Preferably, natural gas comprises at least one of nitrogen, carbon dioxide or technical air. Examples, alternatives, advantages and other explanations for these aspects are also explained in other parts of this disclosure.

Preferably, the at least one sheet-like spacer is a permeable spacer; and wherein the fine graded condenser core further comprises at least one sheet-like non-permeable spacer and/or the conductive sheet is non-permeable. Examples, alternatives, advantages and other explanations for these aspects are also explained in other parts of this disclosure.

Preferably, a fine graded condenser bushing comprising a conductor and the fine graded condenser core as described. Examples, alternatives, advantages and other explanations for these aspects are also explained in other parts of this disclosure.

Preferably, an innermost conductive sheet is made as a rigid tube of a diameter larger than the conductor.

In this manner, the conductor is separated from the at least one wound spacer. In such a way a slit is formed between the conductor and the spacer block allowing for the gas to circulate and dissipate heat from the conductor.

Preferably, a system comprising an apparatus and the fine graded condenser bushing as described, wherein the conductor is electrically connected to the apparatus, and wherein the apparatus is one of a transformer, a switchgear or a high voltage direct current apparatus. Examples, alternatives, advantages and other explanations for these aspects are also explained at other parts of this disclosure. In a preferred embodiment, the fine graded condenser bushing is for an instrument transformer and the apparatus is the according instrument.

The fine graded condenser core may be a core with synthetic non-woven or mesh impregnated in gas (green gas, natural gas, SF6 or alternative) for HVDC (high voltage direct current) application. The fine graded condenser core may be a HV insulation system for a conductor carrying AC or DC current, based on permeable spacer, fine graded capacitive core and gas.

The present disclosure also relates to a method for providing a fine graded condenser core in a gas atmosphere, the method comprising: Winding at least one sheet-like spacer and a conductive sheet into a spiral form to form a plurality of layers, wherein the at least one sheet-like spacer is of a synthetic and permeable fibrous structure; enclosing the at least one sheet-like spacer and the conductive sheet in a casing; pumping out of an old gas atmosphere; creating the gas atmosphere in the casing, wherein the gas of the gas atmosphere impregnates the at least one sheet-like spacer and fills the spaces between the at least one sheet-like spacer, the conducting sheet and the casing.

Examples, alternatives, advantages and other explanations for these aspects are also explained in other parts of this disclosure. The method may further comprise drying the spacer and conductive sheet at an elevated temperature under vacuum, preferably between pumping out the old gas atmosphere and creating the (new) gas atmosphere. The enclosing may contain the gas atmosphere, so that it cannot escape the casing. The fine graded condenser core provided in this method may be the fine graded condenser core as described. The method may not comprise (explicitly exclude) a casting process. This is also an advantage.

When a synthetic spacer is used, the drying step may be omitted. The synthetic material does not absorb moisture, therefore drying is not needed.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.
Fig. 1 shows a fine graded condenser bushing according to an embodiment of this disclosure.
Fig. 2 shows a fine graded condenser bushing according to an embodiment of this disclosure.
Figs. 3 and 4 each show a comparison between an ungraded bushing and a graded bushing in the aspect electric field.
Fig. 5 shows a method for providing a fine graded condenser core in a gas atmosphere.

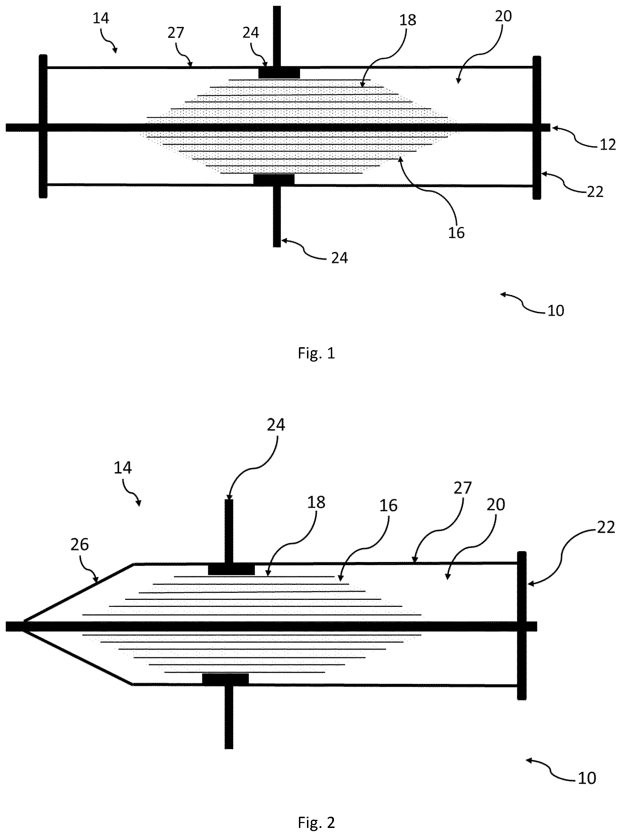

Fig. 1 shows a fine graded condenser bushing 10 according to an embodiment of this disclosure. The fine graded condenser bushing 10 (short: bushing) comprises a conductor 12 and a fine graded condenser core 14 (short: core). The fine graded condenser core 14 comprises at least one spacer 16, conductive sheets 18, gas 20, a casing 22 and a flange 24.

The conductor 12 goes through the fine graded condenser core 14. The conductor 12 may be integrally integrated with the core 14 in the bushing 10. Alternatively, the conductor 12 may pass through a conductor tube of the core. The bushing 10 may be circular symmetrical around a conductor axis.

The conductive sheets 18 (shown by black lines) may be one or several conductive sheets 18. Preferably, multiple conductive sheets 18 are arranged. They may be arranged in pairs as capacitors. Different conductive sheets 18 may be arranged at different radii relative to the conductor 12. At each different radius, a different conductive sheet 18 may be present. While in fig. 1, several conductive sheets 18 at several different radii are shown, the number of conductive sheets 18 may differ. Examples for the number of conductive sheets 18 are two, four, six, or a higher multiple of two, like ten, 20, 30, 50 or more, or 100. The number of conductive sheets 18 may be uneven. For example, there may be nine conductive sheets 18 forming eight pairs. Preferably, the conductive sheets are electrically conductive. The number of conductive sheets may depend on the dimensions. The conductive sheets may be disposed between 1 mm - 5 mm, preferably at 1.5 mm-2mm distances from the neighboring one.

The at least one spacer 16 is arranged between the at least one conductive sheet 18. The at least one spacer 16 is shown in fig. 1 with a dotted area. The spacer 16 is wound in a spiral form. The spacer 16 may be permeable. The spacer 16 is preferably electrically insulating. The spacer 16 may be made of one of different materials or of a combination of different materials, as shown in other places of this disclosure. The at least one spacer 16 may be one or a plurality of spacers 16.

The spacers 16 and conducive sheets 18 as shown only fill up a part of the space in the casing 22 in the axial direction. Alternatively, the spacers 16 and conductive sheets 18 may extend throughout the entire space between the casing and the conductor 12 (/conductive tube). Preferably, the spacers 16 and conductive sheets 18 extend uniformly in an axial direction, such that they do not differ in cross-sections at different axial positions.

The spacers 16 and conductive sheets 18 are in an atmosphere of gas 20. The gas 20 impregnates the spacers 16 when the spacers 16 are permeable. The gas may be one or a combination of the gases as described at other places in this disclosure.

The casing 22 surrounds the spacers 16, conductive sheets 18 and gas 20. The casing 22 is non-permeable. To the inner side, the spacers 16, conductive sheets 18 and gas 20 are restricted by the conductor 12 or conductive tube. If present, the conductive tube may be part of the casing 22. The casing 22 may be provided and/or sealed after the spacers 16, conductive sheets 18 and gas 20 are provided and placed.

The flange 24 is placed at the casing 22. The flange 24 may be placed at or near one of the axial ends of casing 22. There may be two flanges 24. Each of the two flanges 24 may be placed at or near a different axial end of the casing 22. The flanges 24 may comprise a fixation.

The casing 22 comprises the (second) composite tube 27. Depending on the media the ends of the bushing are immersed in, the composite tubes 27 may be of different construction. It can be made of a quartz-powder filled epoxy composite.

Fig. 2 shows a fine graded condenser bushing 10 according to an embodiment of this disclosure. The bushing of fig. 2 is in many aspects similar to the bushing 10 of fig. 1. For the similarities, it is referred to fig. 1. Mainly differences are explicitly described now.

The casing 22 in fig. 2 further comprises a composite tube 26 and a second composite tube 27. Depending on the media the ends of the bushing are immersed in, the composite tubes 26 and 27 may be of different construction. For example, for an oil-air bushing the composite tube to be immersed in oil may be made as a fiber-glass-epoxy composite tube of conical shape as shown in Fig. 2. Alternatively, it can be made of a quartz-powder filled epoxy composite. The composite tube at the bushing end immersed in air can be made as a glass-fiber-epoxy cylindrical tube with an outer shell made of silicone elastomer, as schematically shown in fig. 2.

Oil may be used for applications with other gas as insulation media in the devices of this disclosure. There may be a kind of a removable-rod bushing for the transformer application. There may be an oil slit. As the oil slit is made larger, this can contribute to cooling and making the temperature more uniform in the gas-impregnated condenser core. This is especially preferred for DC applications where temperature gradients influence the field grading.

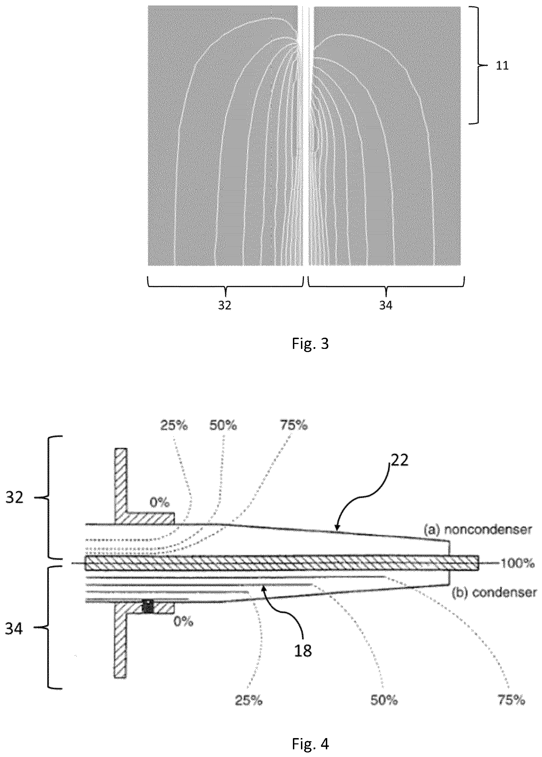

Figs. 3 and 4 each show a comparison between an ungraded bushing (without conductive sheets) and a graded bushing (with conductive sheets) in the aspect of the electric field. The ungraded bushing is shown in region 32. The graded bushing is shown in region 34. In fig. 3, the white middle vertical line between the regions can be regarded a place where the conductor 12 extends. The broader white area in the middle top part (labelled with reference sign 11) of the picture is the bushing (like bushing 10). The light lines in the regions are equipotential lines. For the ungraded bushing many equipotential lines emerge from a very short portion of the axial length of the bushing, while for the graded bushing, the equipotential lines emerge uniformly from different points along the axial length of the bushing.ln fig. 4, dotted lines show only a few chosen equipotential lines corresponding to potential values of 25%, 50%, and 75% of the total voltage present on the conductor of the bushing with respect to ground. It can be seen that for the graded bushing the equipotential lines are more distant from each other, which means that the electric field stress is more distributed along the length of the bushing and has a smaller magnitude. It shows the advantage of the graded bushing without having solid casting. It also shows the advantage of reduced dimensions radially and/or reduced pressure.

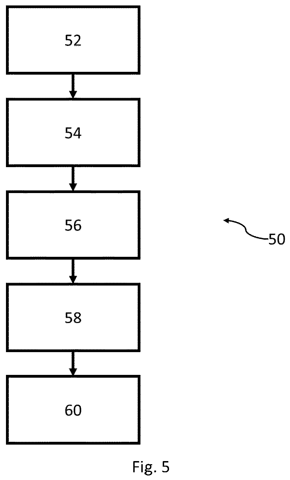

Fig. 5 shows a method 50 for providing a fine graded condenser core in a gas atmosphere, the method comprises several steps. In step 52, at least one sheet-like permeable spacer and a conductive sheet are wound into a spiral form to form a plurality of layers. In step 54, the at least one sheet-like permeable spacer and the conductive sheet are enclosed in a casing. In step 56, an old gas atmosphere is pumped out. In step 60, the gas atmosphere is created in the casing, wherein the gas of the gas atmosphere impregnates the at least one sheet-like permeable spacer and fills the spaces between the at least one sheet-like spacer, the conducting sheet and the casing.

The method 50 may further comprise optional step 58 of drying the spacer and conductive sheet at an elevated temperature under vacuum, preferably between pumping out the old gas atmosphere and creating the (new) gas atmosphere. The enclosing may contain the gas atmosphere, so that it cannot escape the casing. The fine graded condenser core provided in this method may be the fine graded condenser core as described. The method may not comprise a casting process. This is also an advantage.

Here some exemplary embodiments of bushing arrangements are mentioned. They are arranged as described above and the materials are as follows:

| Embodiment | Spacer 16 | Conductive sheet 18 | Gas 20 |
|---|---|---|---|
| Embodiment 1 | Organic permeable | Non-permeable, conductive | Natural gas (nitrogen, carbon dioxide, technical air) |
| Embodiment 2 | Organic permeable | Non-permeable, conductive | F-component gas |
| Embodiment 3 | Organic permeable | Non-permeable, conductive | SF6 |
| Embodiment 4 | Inorganic permeable: fibrous structure | Non-permeable, conductive | Natural gas (nitrogen, carbon dioxide, technical air) |
| Embodiment 5 | Inorganic permeable: fibrous structure | Non-permeable, conductive | F-component gas |
| Embodiment 6 | Inorganic permeable: fibrous structure | Non-permeable, conductive | SF6 |
| Embodiment 7 | Combination of permeable and non-permeable spacers | Non-permeable, conductive | Natural gas (nitrogen, carbon dioxide, technical air) |
| Embodiment 8 | Combination of permeable and non-permeable spacers | Non-permeable, conductive | F-component gas |
| Embodiment 9 | Combination of permeable and non-permeable spacers | Non-permeable, conductive | SF6 |

Another set of embodiments is as follows:

| Embodiment | Spacer 16 | Conductive sheet 18 | Gas 20 |
|---|---|---|---|
| Embodiment 10 | Paper, film and/or plastic, non-woven | Non-permeable, conductive | nitrogen |
| Embodiment 11 | Paper, film and/or plastic, non-woven | Non-permeable, conductive | carbon dioxide |
| Embodiment 12 | Paper, film and/or plastic, non-woven | Non-permeable, conductive | Technical air |

Another set of embodiments is as follows:

| Embodiment | Spacer 16 | Conductive sheet 18 | Gas 20 |
|---|---|---|---|
| Embodiment 13 | inorganic, permeable fibrous structure: woven | Non-permeable, conductive | Natural gas (nitrogen, carbon dioxide) |
| Embodiment 14 | inorganic, permeable fibrous structure: mesh | Non-permeable, conductive | Natural gas (nitrogen, carbon dioxide) |
| Embodiment 15 | inorganic, permeable fibrous structure: net structure | Non-permeable, conductive | Natural gas (nitrogen, carbon dioxide) |
| Embodiment 16 | Synthetic organic; Permeable fibrous structure: woven | Non-permeable, conductive | Natural gas (nitrogen, carbon dioxide) |
| Embodiment 17 | Synthetic organic; Permeable fibrous structure: knitted | Non-permeable, conductive | Natural gas (nitrogen, carbon dioxide) |
| Embodiment 18 | Synthetic organic; Permeable fibrous structure: mesh | Non-permeable, conductive | Natural gas (nitrogen, carbon dioxide) |
| Embodiment 19 | Synthetic organic; Permeable fibrous structure: net structure | Non-permeable, conductive | Natural gas (nitrogen, carbon dioxide) |
| Embodiment 20 | Synthetic hybrid organic and inorganic; Permeable fibrous structure: woven | Non-permeable, conductive | Natural gas (nitrogen, carbon dioxide) |
| Embodiment 21 | Synthetic hybrid organic and inorganic; Permeable fibrous structure: knitted | Non-permeable, conductive | Natural gas (nitrogen, carbon dioxide) |
| Embodiment 22 | Synthetic hybrid organic and inorganic; Permeable fibrous structure: mesh | Non-permeable, conductive | Natural gas (nitrogen, carbon dioxide) |
| Embodiment 23 | Synthetic hybrid organic and inorganic; Permeable fibrous structure: net structure | Non-permeable, conductive | Natural gas (nitrogen, carbon dioxide) |
| Embodiment 24 | inorganic, permeable fibrous structure: woven | Non-permeable, conductive | Technical air |
| Embodiment 25 | inorganic, permeable fibrous structure: mesh | Non-permeable, conductive | Technical air |
| Embodiment 26 | inorganic, permeable fibrous structure: net structure | Non-permeable, conductive | Technical air |
| Embodiment 27 | Synthetic organic; Permeable fibrous structure: woven | Non-permeable, conductive | Technical air |
| Embodiment 28 | Synthetic organic; Permeable fibrous structure: knitted | Non-permeable, conductive | Technical air |
| Embodiment 29 | Synthetic organic; Permeable fibrous structure: mesh | Non-permeable, conductive | Technical air |
| Embodiment 30 | Synthetic organic; Permeable fibrous structure: net structure | Non-permeable, conductive | Technical air |
| Embodiment 31 | Synthetic hybrid organic and inorganic; Permeable fibrous structure: woven | Non-permeable, conductive | Technical air |
| Embodiment 32 | Synthetic hybrid organic and inorganic; Permeable fibrous structure: knitted | Non-permeable, conductive | Technical air |
| Embodiment 33 | Synthetic hybrid organic and inorganic; Permeable fibrous structure: mesh | Non-permeable, conductive | Technical air |
| Embodiment 34 | Synthetic hybrid organic and inorganic; Permeable fibrous structure: net structure | Non-permeable, conductive | Technical air |
| Embodiment 35 | inorganic, permeable fibrous structure: woven | Non-permeable, conductive | SF6 |
| Embodiment 36 | inorganic, permeable fibrous structure: mesh | Non-permeable, conductive | SF6 |
| Embodiment 37 | inorganic, permeable fibrous structure: net structure | Non-permeable, conductive | SF6 |
| Embodiment 38 | Synthetic organic; Permeable fibrous structure: woven | Non-permeable, conductive | SF6 |
| Embodiment 39 | Synthetic organic; Permeable fibrous structure: knitted | Non-permeable, conductive | SF6 |
| Embodiment 40 | Synthetic organic; Permeable fibrous structure: mesh | Non-permeable, conductive | SF6 |
| Embodiment 41 | Synthetic organic; Permeable fibrous structure: net structure | Non-permeable, conductive | SF6 |
| Embodiment 42 | Synthetic hybrid organic and inorganic; Permeable fibrous structure: woven | Non-permeable, conductive | SF6 |
| Embodiment 43 | Synthetic hybrid organic and inorganic; Permeable fibrous structure: knitted | Non-permeable, conductive | SF6 |
| Embodiment 44 | Synthetic hybrid organic and inorganic; Permeable fibrous structure: mesh | Non-permeable, conductive | SF6 |
| Embodiment 45 | Synthetic hybrid organic and inorganic; Permeable fibrous structure: net structure | Non-permeable, conductive | SF6 |

In the embodiments 1 to 45, the spacer 16 is preferably electrically insulating. The gas 20 may be pure, or to a high percentage (for example 90%) the mentioned gas. The spacer 16 is preferably permeable.

Further technical advantages of the disclosure are: save and reliable operation under all field conditions; covering all needed ratings; lower maintenance-free; no materials of high concern (REACH compliant, no PFAS); low environmental footprint (low CO2 emission, no oil spills,....); low operational losses (Joule losses are more than 80% of total bushing losses and dielectric losses in gas-impregnated spacer are lower than in conventional solid-state insulating material, e.g., in RIP bushing) ; simple transportation, storage, and installation; recycling ability by end of life; enabled for real time monitoring (digital); suitable for higher continuous operation temperatures / overload capability; resistance against transients, incl. VFT; low weight and mechanically strong; price competitiveness and short lead times; fast production processes (TPT/TTPT reduction); no harmful chemicals/materials in production; low scrape rates / possibility for fast repairs; low CAPEX and labor contribution; possibility for automated processes; easy and fast to customize (automated engineering); simple to transfer technology to new locations (low CAPEX requirements); and high-cost competitiveness.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A fine graded condenser core for a fine graded condenser bushing, the fine graded condenser core comprising:
at least one sheet-like spacer wound in a spiral form to form a plurality of layers, wherein the at least one spacer is of a permeable fibrous structure;
a conductive sheet; and
gas impregnating the at least one sheet-like spacer and the conductive layer.

2. Fine graded condenser core according to claim 1, wherein the permeable fibrous structure of the at least one spacer is synthetic, and preferably wherein the synthetic fibrous structure is produced by chemical or biochemical synthesis, and/or made from chemicals or artificial substances.

3. Fine graded condenser core according to claim 1 or 2, wherein the synthetic fibrous structure is made from hybrid organic and inorganic fibrous structure, organic fibrous structure, or inorganic fibrous structure.

4. Fine graded condenser core according to any one of claims 1 to 3, wherein the permeable fibrous structure is non-woven, and/or wherein the permeable fibrous structure is a woven mesh, net structure or knitted fibrous structure.

5. Fine graded condenser core according to any one of claims 1 to 4, further comprising a casing, preferably wherein the casing is made of porcelain, fiberglass, silicone or epoxy.

6. Fine graded condenser core according to claim 5, wherein the fine graded condenser core further comprises a flange configured to electrically connect the casing to ground.

7. Fine graded condenser core according to any one of claims 1 to 6, wherein the gas comprises at least one of Sulfur hexafluoride, SF6, F-component gas or natural gas.

8. Fine graded condenser core according to claim 7, wherein natural gas comprises at least one of nitrogen, carbon dioxide or technical air.

9. Fine graded condenser core according to any one of claims 1 to 8, wherein the at least one sheet-like spacer is a permeable spacer; and
wherein the fine graded condenser core further comprises at least one sheet-like non-permeable spacer and/or the conductive sheet is non-permeable.

10. A fine graded condenser bushing comprising a conductor and the fine graded condenser core of any one of claims 1 to 9.

11. Fine graded condenser bushing according to claim 10, wherein an innermost conductive sheet is made as a rigid tube of a diameter larger than the conductor.

12. A system comprising an apparatus and the fine graded condenser bushing according to claim 11, wherein the conductor is electrically connected to the apparatus, and wherein the apparatus is one of a transformer, a switchgear or a high voltage direct current apparatus.

13. A method for providing a fine graded condenser core in a gas atmosphere, the method comprising:
winding at least one sheet-like spacer and a conductive sheet into a spiral form to form a plurality of layers, wherein the at least one sheet-like spacer is of a synthetic and permeable fibrous structure;
enclosing the at least one sheet-like spacer and the conductive sheet in a casing;
pumping out of an old gas atmosphere;
creating the gas atmosphere in the casing, wherein the gas of the gas atmosphere impregnates the at least one sheet-like spacer and fills the spaces between the at least one sheet-like spacer, the conducting sheet and the casing.
